# EUROPEAN PATENT SPECIFICATION

(11) **EP 3 894 041 B1**
(45) Date of publication and mention of the grant of the patent: **11.03.2026**
(21) Application number: 19896464.5
(22) Date of filing: 10.12.2019
(51) Int. Cl.: B01D 24/22, B01D 29/00, B01D 29/11, B01D 29/39, B01D 33/19, B01D 33/21, B01D 24/14, B01D 24/46

(54) **SUPPORT GRID ASSEMBLY FOR PRESSURE VESSEL**
STÜTZGITTERANORDNUNG FÜR DRUCKBEHÄLTER
ENSEMBLE GRILLE DE SUPPORT POUR RÉCIPIENT SOUS PRESSION

(30) Priority: 10.12.2018 US 201862777537 P
(43) Date of publication of application: 20.10.2021
(73) Proprietor: Johnson Screens, Inc., New Brighton, MN 55112 (US)
(72) Inventor: DEHN, Steven, New Brighton, MN 55112 (US); ROSIEJKA, Brett, New Brighton, MN 55112 (US); AL-FARSI, Ali, New Brighton, MN 55122 (US); SHIPMAN, Kyle, New Brighton, MN 55112 (US); MORIARTY, Miles, New Brighton, MN 55112 (US); DREWS, Kyle, New Brighton, MN 55112 (US)
(74) Representative: Korenberg, Alexander Tal
(86) International application number: PCT/US2019/065475
(87) International publication number: WO 2020/123504

(56) References cited:
- US-A- 3 389 800
- US-A- 3 747 768
- US-A- 5 068 033
- US-A- 5 296 140
- US-A1- 2002 185 427
- US-A1- 2014 027 369
- US-A1- 2014 027 369
- US-A1- 2015 290 564
- US-A1- 2016 236 117

## Description

### FIELD OF THE INVENTION

The present invention is directed to a support grid assembly for use in a pressure vessel. More specifically, the present invention is directed to a support grid assembly having one or more screen panels that are operably, fluidly connected to a central flow manifold, whereby the screen panels are flexibly coupled to the central flow manifold so as to accommodate variances found in the fabrication of a vessel floor.

### BACKGROUND

In some petrochemical and general industry applications, support grids having internal filter screens are needed in process pressure vessels for the purposes of filtering and supporting filter media. These support grids not only serve to prevent migration of the filter media from the vessel but can further serve to provide even fluid distribution patterns, thereby allowing effective use of all of filter media capacity. Furthermore, these support grids can be used to routinely backwash or regenerate the filter media. Conventional support grid assemblies include those available from the Aqseptence, Inc. of New Brighton, Minnesota and sold under the Johnson Screens brand as well as those disclosed in US Patent No. 6,790,357 and US Patent Publication 20140027369A1.

While these support grids are valuable in improving the overall performance of process pressure vessels, it is a fundamental requirement that these support grids and their internal filter screens be robust enough to support the filter media above them, often comprising thousands of pounds of filter media. However, the methods used in fabricating large pressure vessels can lead to variations in a vessel floor, which otherwise supports these support grids. As such, it would be advantageous to have an adaptable support grid design that could accommodate variations in vessel floor construction such that the support grid and their internal screens properly support the filter media.

US 5068033 describes an underdrain assembly contained within a swimming pool filter has a plurality of laterals, each of which is pivotable between a non-operating position and an operating position. Each of the laterals is threadedly attached to the underdrain assembly so that they can be replaced individually by unscrewing them from the underdrain assembly without removing the underdrain assembly from the filter. The laterals can be locked in their operating positions by either a reversible locking mechanism or an irreversible locking mechanism. With the laterals in their non-operating positions, the underdrain assembly and the laterals can be inserted into the filter as a unit.

US 2016/236117 describes a liquid filter device can filter liquid flowing therethrough using a granulated filter media included in a tank. The liquid filter device can perform a backwash of the granulated filter media by creating active zones and inactive zones in the tank. In the active zones, the granules are agitated and driven by a flow of liquid toward the top of the tank. In the inactive zones, the granules fall by gravity toward the bottom of the tank. The liquid filter device can include a conduit, a hub and a number of laterals, each of which may individual fit through an opening in the tank and be assembled to form a combined structure that will not fit through the opening in the tank. The active zones may be created above a top surface of each of the laterals by including slots on the top surface.

US 3747768 describes a filter unit generally including a fluid tank having a restricted opening in the upper end thereof in which a fluid distributor provided with at least two fluid ports may be fitted, a return conduit disposed within the fluid tank, communicating at an upper end thereof with a port of the fluid distributor, a filter medium disposed in the fluid tank, and at least one filtrate collector disposed within the tank embedded in the filter medium and communicable with the return conduit.

US 2014/027369 describes a support grid assembly for use in a vessel. The support grid assembly includes panels each including a first wall including a media-supporting screen and a second wall to be supported by the vessel wall inner surface. A manifold is coupled to the panels and is in hydraulic communication with vessel outlet. The manifold and the panels permit fluid to flow through the screen in each panel, through the panels, into the manifold, and through the manifold to the outlet of the vessel, as well as in the reverse direction. At least a portion of the first wall may slope downward toward the manifold, and at least a portion of the second wall may form a bottom surface that is curved to substantially conform to a curvature of the vessel wall inner surface. The panels may be arranged in a circular configuration extending radially from the manifold.

### SUMMARY OF THE INVENTION

In accordance with embodiments disclosed herein, a support grid assembly for use in a pressure vessel according to claim 1 one or more screen panel assemblies that are flexibly, fluidly coupled to a central fluid manifold. Generally, each screen panel slidably connects to a central fluid manifold and is connected with a flexible connection. In some embodiments, the flexible connection can comprise an adjustable split flange connection while in other embodiments, the flexible connection can make use of a flexible gasket member. Each screen panel assembly can include a male connecting end adapted for slidable insertion though a manifold sleeve opening on the central fluid manifold. In some embodiment, the connection of the each screen panel assembly and the central fluid manifold can be rotatably supported by a lower mounting arm that extends from a bottom portion of the screen panel assembly and that engages a support bracket extending from the central fluid manifold. In one representative embodiment, the lower mounting arm can comprise a mounting rod that can rotatably interface with the support bracket. Through the use of the flexible connection, each screen panel assembly can individually slide, rotate or otherwise shift relative to the central fluid manifold under loading of a filter media such that each screen panel assembly can fully engage a vessel floor regardless of surface and shape variations due to materials or fabrication techniques used when constructing the pressure vessel.

In one aspect, the present invention is directed to a support grid assembly, wherein individual screen panel assemblies are operably, flexibly coupled to a central fluid manifold such that variations in vessel floor construction are accommodated though sliding, rotation, and/or shifting of each individual screen panel assembly

In another aspect, the present invention is directed to a method of providing flexibility to a support grid assembly such that variations in vessel floor construction can be accommodated without damaging the support grid assembly.

In yet another aspect, the present invention is directed to a pressure vessel having a support grid assembly that can flexibly accommodate variations in vessel floor construction.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a schematic, section view of a pressure vessel including a support grid assembly according to the prior art.
FIG. 2 is a perspective, top view of an embodiment of a support grid assembly according to an embodiment of the present invention
FIG. 3 is an exploded, perspective view of a central fluid manifold according to an embodiment of the present invention.
FIG. 4 is a section view of the support grid assembly of FIG. 2.
FIG. 5 is a detailed section view of the support grid assembly taken at Detail B of FIG. 4.
FIG. 6 is a perspective, end view of a screen panel assembly according to an embodiment of the present invention.
FIG. 7 is a top view of a split flange member according to an embodiment of the present invention.
FIG. 8a is a perspective, side view of a screen panel assembly inserted into a central fluid manifold with a disengaged split flange assembly according to an embodiment of the present invention.
FIG. 8b is a perspective, side view of a screen panel assembly inserted into a central fluid manifold and rotatably engaged with a vessel floor and having a disengaged split flange assembly according to an embodiment of the present invention
FIG. 8c is a perspective, side view of a screen panel assembly inserted into a central fluid manifold and rotatably engaged with a vessel floor and having a split flange assembly engaged with the central fluid manifold according to an embodiment of the present invention.
FIG. 9 is a top view of an embodiment of a support grid assembly according to an embodiment of the present invention.
FIG. 10 is a perspective top view of the support grid assembly of FIG. 9.
FIG. 11 is a perspective top view of a screen panel assembly according to an embodiment of the present invention.
FIG. 12 is a side view of the screen panel assembly of FIG. 11.
FIG. 13 is a top view of the screen panel assembly of FIG. 11.
FIG. 14 is a perspective top view of a screen panel coupling flange according to an embodiment of the present invention.
FIG. 15 is a partially hidden side view of the support grid assembly of FIG. 9.
FIG. 16 is a perspective top view of a panel mounting body structure according to an embodiment of the present invention.
FIG. 17 is a detailed, perspective top view of a portion of the panel mounting body structure of FIG 16.
FIG. 18 is a detailed, section view of a portion of the panel mounting body structure of FIG. 16.
FIG. 19 is a perspective top view of a mounting cylinder according to an embodiment of the present invention.
FIG. 20 is a side view of the mounting cylinder of FIG. 19.
FIG. 21 is a detailed section view of a portion of the support grid assembly of FIG. 9.
FIG 22 is a perspective top view of a plate member portion of a cover plate according to an embodiment of the present invention.
FIG. 23 is a perspective bottom view of the plate member portion of FIG. 22.
FIG. 24 is a side view of the plate member portion of FIG. 22.

### DETAILED DESCRIPTION OF THE INVENTION

The following detailed description of embodiments refers to the accompanying drawings, which illustrate specific embodiments. Other embodiments having different structures and operation do not depart from the scope of the present disclosure.

Embodiments disclosed herein include a support grid assembly that can be used within tanks or vessels to support media beds through which fluids are directed. Such media beds can be used in a variety of processes, including but not limited to catalytic, molecular sieves, alumina drying, resin ion exchange, carbon filtering, etc. Various fluids, including but not limited to liquid, gas, oil, water, etc., can be processed through the vessel. The vessel can be oriented vertically, horizontally, or in other orientations and configurations known in the art. The vessel can generally comprise a body and head portions coupled at opposite ends of the body to form a sealed interior vessel volume. The support grid assembly can be disposed along and utilize the inner surface of the vessel head for structural support, as well as to maximize the interior vessel volume for use by additional media and other interior components.

The support grid assembly can include a plurality of panels, with each panel having a filtering surface formed by one or more screens on the top, side, bottom, or other exposed surface of the panels, and a central fluid manifold coupled to the panels. The panels can be, in some embodiments, radially disposed about the manifold. The screens can support a media bed, and in certain modes such a down flow, fluid can flow through the media bed and the screens into the panels. Fluid can then flow into the manifold and out of the vessel. Fluid can also flow directly into the manifold through a screen or perforated plate portion that forms a top of the manifold. Alternatively, the direction of flow can be reversed, such as in certain modes of up flow, and flow into the manifold can be distributed to the panels, with flow then passing out of the panels, through the screens. and into the vessel. Flow through the assembly in either an up flow or down flow condition can be compressible (gas) or incompressible (liquid).

Certain terminology is used herein for convenience only and is not to be taken as a limitation on the embodiments described. For example, words such as "top", "bottom", "upper," "lower," "left," "right," "horizontal," "vertical," "upward," and "downward" merely describe the configuration shown in the figures. Indeed. the referenced components can be oriented in any direction and the terminology, therefore, should be understood as encompassing such variations unless specified otherwise. Throughout this disclosure. where a process or method is shown or described, the method can be performed in any order or simultaneously, unless it is clear from the context that the method depends on certain actions being performed first.

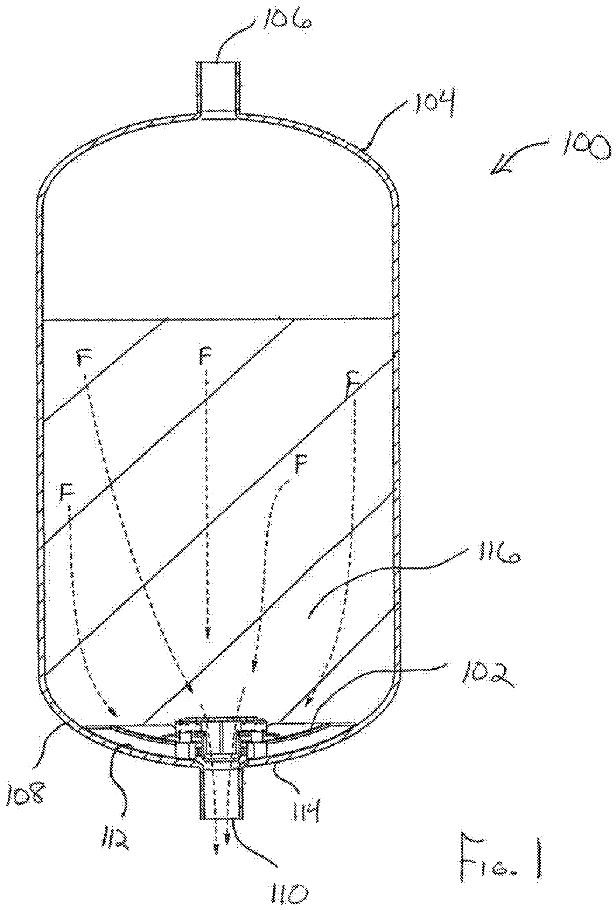

With reference to FIG. 1, a representative pressure vessel of the prior art can comprise a cylindrical vessel including a support grid assembly 102 The cylindrical vessel 100 can define an upper portion 104 having an inlet 106 and a lower portion 108 with an outlet 110. As illustrated, support grid assembly 102 can be operably connected to the outlet 110 and reside and be supported by a vessel floor 112 of a lower vessel head 114. As presently described. inlet 106 and outlet 110 are described relative to arrows F indicated a direction of fluid flow in one conventional mode of operation. It will be understood that ins other modes of operation, for example, during a backwash operation, the direction of fluid flow can be reversed with outlet 110 acting as an inlet and inlet 106 functioning as an outlet. Generally, a filter media 116 resides on top of and is supported by the support grid assembly 102. Representative filter media can include sand, activated carbon, ion exchange resin, manganese greensand, catalytic materials and other conventional media used within pressure vessels.

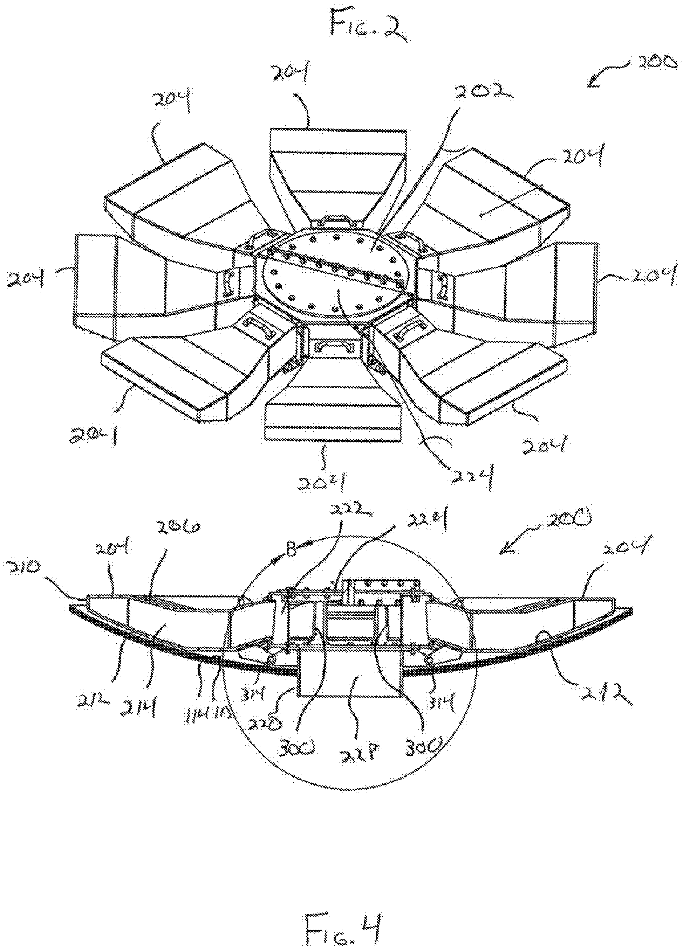

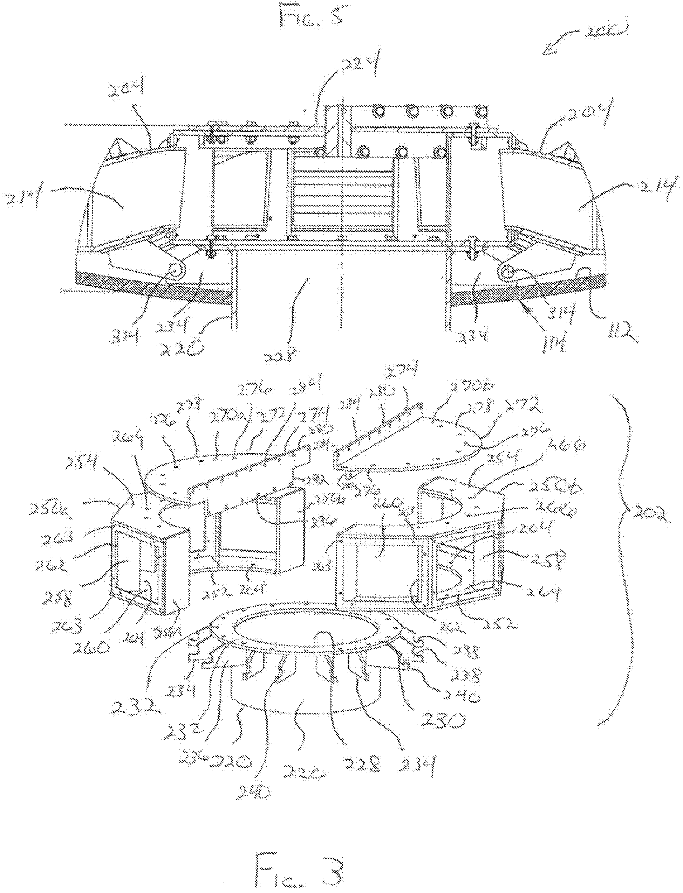

Referring now to FIGS 2, 3, 4 and 5, a representative support grid assembly 200 of the present invention can be utilized with cylindrical vessel 100 to replace the support grid assembly 102. Generally, support grid assembly 200 comprises a central fluid manifold 202 about which a plurality of screen panel assemblies 204 can be spaced and individually mounted. Each screen panel assembly 204 can comprise an upper surface 206, a pair of side surfaces 208a, 208b, an end surface 210 and a lower surface 212 that cooperatively define an internal fluid collection area 214. Generally, upper surface 206 can comprise one or more screen panels 216 that allow a fluid to pass through the screen panel 216 while preventing the passage of filter media 116. In a preferred embodiment, screen panel 216 can include a plurality of spaced filter wires supported on support rods. In one embodiment, screen panel 216 can include wire with a substantially triangular cross-section, for example, Vee-Wire^{®} type screens (VEE-WIRE is a registered trademark of Aqsepterice, Inc. of New Brighton, Minnesota) or wedge wire type screens. In other representative embodiments, screen panel 216 can include plates having perforations, slots, and/or other filter-type openings formed therein In various embodiments, the wires and/or plate openings can be oriented symmetrically, asymmetrically, horizontally, vertically, tangentially, and combinations thereof relative to a longitudinal axis defined by each screen panel assembly 204. In certain embodiments, the spacing and sizes of wires and/or plate openings defined on each screen panel 216 can vary along the surface of each screen panel 216. In some representative embcxliments, each screen panel 216 can include one or more combinations of filter wires, plates, features with perforations and features that otherwise provide a plurality of filter-type openings allowing fluid to pass through said filter-type openings while preventing the passage of filter media. In addition to the presence of screen panel 216 on the upper surface 206, one or more screen panels 216 can also be found on one or more of the side surfaces 208a, 208b, end surface 210 and lower surface 212 to increase the filtering capacity of each screen panel assembly 204 or to achieve desired flow properties, for example, fluid velocities through the screen panel 216 Though not illustrated, it will be understood that each screen panel assembly 204 can comprise one or more flow directors or flow channels defined within the internal fluid collection area 214 capable of directing fluid flow to the central fluid manifold 202 in normal operation or out the screen panels 216 in a backwash mode. In some embodiments, the one or more flow directors can extend between the upper surface 206 and lower surface 212 to provide structural reinforcement to the screen panel assembly 204.

As best seen in FIGS. 2, 3, 4, 5, 8a, 8b and 8c, central fluid manifold 202 can comprise a mounting cylinder 220, a panel mounting body 222 and a cover plate 224. Mounting cylinder 220 generally comprises a cylindrical body 226 defining a flow passage 228 and terminating at an upwardly facing mounting flange 230. Mounting flange 230 can include a plurality of spaced apart mounting apertures 232. Central fluid manifold 202 can further include a plurality of spaced apart mounting brackets 234 coupled to the mounting cylinder 220 and mounting flange 230. Preferably, there are at least two mounting brackets 234 for each screen panel assembly 204 Each mounting bracket 234 includes a bracket body 236 extending radially from the cylindrical body 226 and includes an arcuate notch 238 at a radially distal surface 240 of the bracket body 236. Panel mounting body 222 can be cooperatively defined by a pair of substantially identical body structures 250a, 250b. Each body structure 250a, 250b can include a lower wall 252, an upper wall 254, a pair of end walls 256a, 256b and a plurality of internal walls 258 that extend between the lower wall 252 and upper wall 254 Adjacent end walls 256a, 256b and internal walls 258 can define individual manifold sleeve openings 260. Generally, the number of manifold sleeve openings 260 will correspond directly to the number of screen panel assemblies 204 of the support grid assembly 200. As illustrated, the manifold sleeve openings 260 can define a substantially rectangular opening 262. Alternatively, the manifold sleeve openings 260 can have different opening shapes, for example, circular or oval-like shapes. In some instances, the shape of the manifold sleeve openings 260 can be adjusted through the use of a sleeve plate that can mount over each manifold sleeve opening 260, wherein the sleeve plate includes a sleeve aperture defining a desired shape. A plurality of sleeve apertures 263 can be spaced around each manifold sleeve openings 260. Lower wall 252 of each body structure 250a, 250b can include a plurality of lower apertures 264. wherein the number and spacing of lower apertures 264 correspond directly with the number and spacing of the mounting apertures 232. Upper wall 254 of each body structure 250a, 250b can include a plurality of spaced apart upper apertures 266. Cover plate 224 can comprise a pair of substantially identical plate members 270a, 270b Each plate member 270a, 270b can comprise an arcuate plate body 272 that terminates in a cover flange 274. A plurality of cover apertures 276 can be spaced about a perimeter portion 278 of the arcuate plate body 272 wherein the spacing and number of cover apertures 276 corresponds directly with the upper apertures 266. Cover flange 274 can define an upper portion 280 and a lower portion 282, wherein the upper portion 280 has a width equal to the diameter of the cover plate 224 and wherein the lower portion 282 has a width that is less than the distance between the end walls 256a, 256b of the body structures 250a, 250b Upper portion 280 can include a plurality of upper flange apertures 284 and lower portion 282 can include a plurality of lower flange apertures 286. Depending upon desired flow capacity and flow characteristics, portions of the cover plate 224, for example, the arcuate plate body 272 and/or portions of the mounting cylinder 220, for example, the cylindrical body 226 can be fabricated to include one or more screen panels 216 such that the central fluid manifold 202 can allow fluid to flow directly into or out of the central fluid manifold 202 without passing through the individual screen panel assemblies 204.

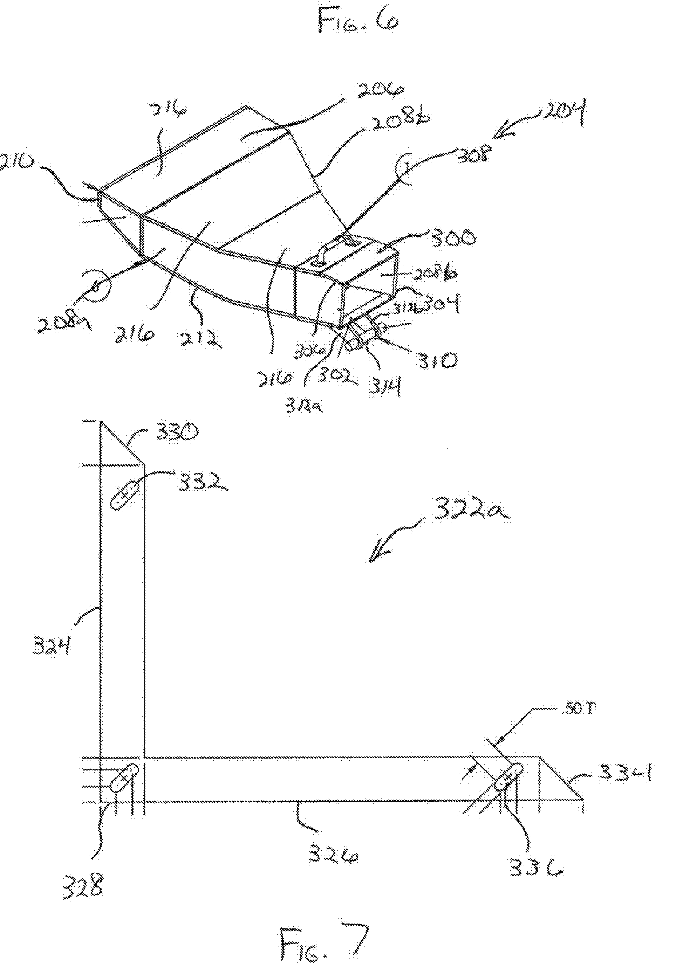

With reference to FIG. 6, each screen panel assembly 204 can include a male connecting end 300 defined by the upper surface 206, side surfaces 208a, 208b and lower surface 212. Male connecting end 300 can define a panel assembly opening 302 defining an opening perimeter shape 304. Proximate the panel assembly opening 302, the upper surface 206, side surfaces 208a, 208b and lower surface 212 can define an inward tapered surface 306 Upper surface 206 can include one or more handle members 308. Lower surface 212 can include a lower mounting arm 310 attached so as to project downward from the screen panel assembly 204 The lower mounting arm 310 can include a pair of arm brackets 312a, 312b that support a cylindrical mounting rod 314

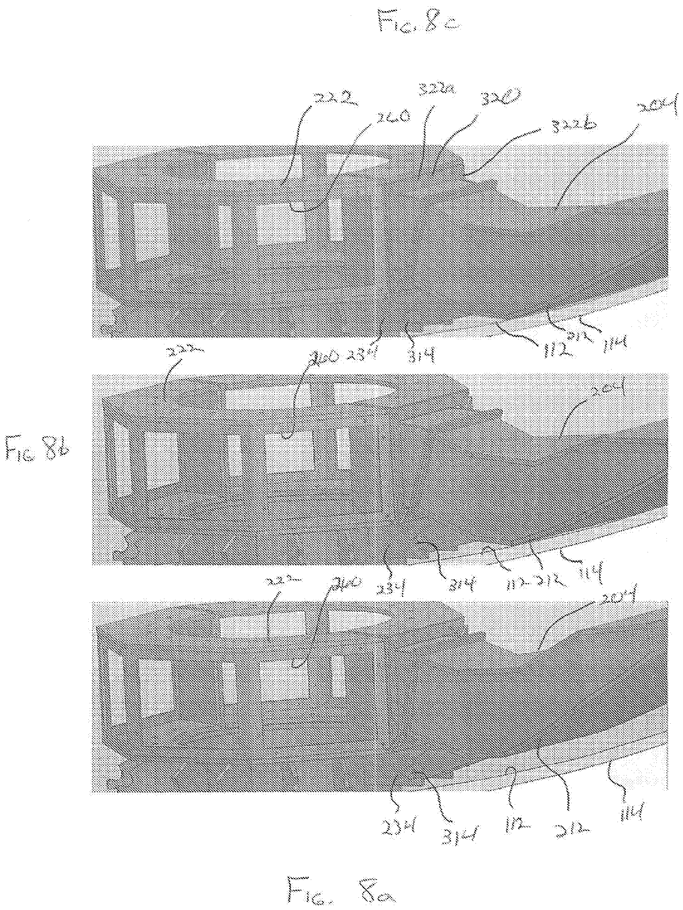

As seen in FIGS. 7, 8a, 8b and 8c, support grid assembly 200 can further comprise a split flange assembly 320 formed from a pair of substantially identical flange members 322a, 322b Each flange member 322a, 322b can comprise a first leg 324 and a second leg 326 extending from a corner portion 328. First leg 324 can terminate at a first end 330 having an angled first aperture 332. Second leg 326 can terminate at a second end 334 having an angled second aperture 336. Corner portion 328 can include an angled corner aperture 338. Generally, split flange assembly 320 is formed by a positioning first end 330 of flange member 322a proximate the second end 334 of the flange member 322b with the second end 334 of flange member 322a proximate the first end 330 of flange member 322b. With the flange members 322a, 322b arranged in this manger, the split flange assembly 320 defines an inner opening 340 that substantially resembles the opening perimeter shape 304 of male connecting end 300 with the difference being that the inner opening 340 is slightly oversized when compared to the male connecting end 300. When flange members 322a, 322b are arranged to form the split flange assembly 320, the respective angled first apertures 332, angled second apertures 336 and angled corner apertures 338 are arranged to align with the sleeve apertures 263 around a corresponding manifold sleeve opening 260. The angled nature of the angled first apertures 332, angled second apertures 336 and angled central apertures 338 provide adjustability when mounting the flange members 322a, 322b.

Generally, support grid assembly 200 is assembled within the cylindrical vessel 100 by mounting the mounting cylinder 220 to the vessel floor 112 such that the flow passage 228 is in fluid connection with the outlet 110 and the upwardly facing mounting flange 230 is elevated above the vessel floor 112. Next, each of the body structure 250a, 250b are positioned on the upwardly facing mounting flange 230 such that the lower apertures 264 are in alignment with the mounting apertures 232. Appropriate fasteners, for example, threaded screws, nuts and bolts and the like can be inserted through the lower apertures 264 and mounting apertures 232 to couple the panel mounting body 222 to the mounting cylinder 220. Each of the screen panel assemblies 204 can then be attached to the panel mounting body 222 by inserting the male connecting end 300 though a corresponding manifold sleeve opening 260 such that the panel assembly opening 302 is located within the mounting cylinder 220 and in fluid communication with the flow passage 228 As each male connecting end 300 is inserted through the corresponding manifold sleeve opening 260. the cylindrical mounting rod 314 on each lower mounting arm 310 can be placed into rotatable engagement with the corresponding arcuate notches 238 on the two or more mounting brackets 234 that correspond with each screen panel assembly 204. Next the split flange assembly 320 can be positioned around the screen panel assembly 204 such that the angled first apertures 332, angled second apertures 336 and angled central apertures 338 of flange members 322a, 322b are aligned with the corresponding sleeve apertures 263. Using suitable fasteners such as threaded screws or nut and bolts, the split flange assembly 320 is coupled to the corresponding manifold sleeve opening 260, whereby the angled nature of the angled first apertures 332, angled second apertures 336 and angled central apertures 338 allow the split flange assembly 320 to be positioned snugly about the corresponding screen panel assembly 204 With the split flange assembly 320 attached, each screen panel assembly 204 can rotate about the cylindrical mounting rod 314 such that the lower surface 212 can come into contact with the vessel floor 112 to provide support to each screen panel assembly 204 as filter media 116 is supported by each upper surface 206. With the screen panel assemblies 204 fluidly coupled to the panel mounting body 222, the cover plate 224 can be placed over the body structures 250a, 250b to enclose the flow passage 228 Generally, the plate members 270a, 270b can be coupled together using suitable fasteners such as threaded screws, nuts and bolts and the like and by aligning the corresponding upper flange apertures 284 and the lower flange apertures 286. Next, the cover plate 224 is placed on the panel mounting body 222 such that the lower portion 282 extends between the body structures 250a, 250b and the cover apertures 276 are aligned with the upper apertures 266 of the panel mounting body 222. Suitable fasteners such as threaded screws, nuts and bolts and the like are used to couple the cover plate 224 to the panel mounting body 222.

With the support grid assembly 200 fully assembly and operably installed within the cylindrical vessel 100, fluid flow can be introduced in both conventional and backwash modes of operation as previously discussed. By avoiding a direct coupling of the screen panel assemblies 204 to the central fluid manifold 202, each screen panel assembly 204 is provided flexibility and support to avoid damage to the screen panel assembles 204 under loading from the filtration media 116. The slidable interaction of the male connecting end 300 with the manifold sleeve openings 260 and the adjustability of the split flange assembly 320 along with the rotatable interaction and support of the cylindrical mounting rod 314 and mounting brackets 234 allow the lower surface 212 of each screen panel assembly 204 to engage the vessel floor 112 even if the fabrication of the lower vessel head 114 is uneven or inconsistent across its profile. In this way, support grid assembly 200 can accommodate fabrication variations in the cylindrical vessel 100 while still providing support and advantageous flow characteristics.

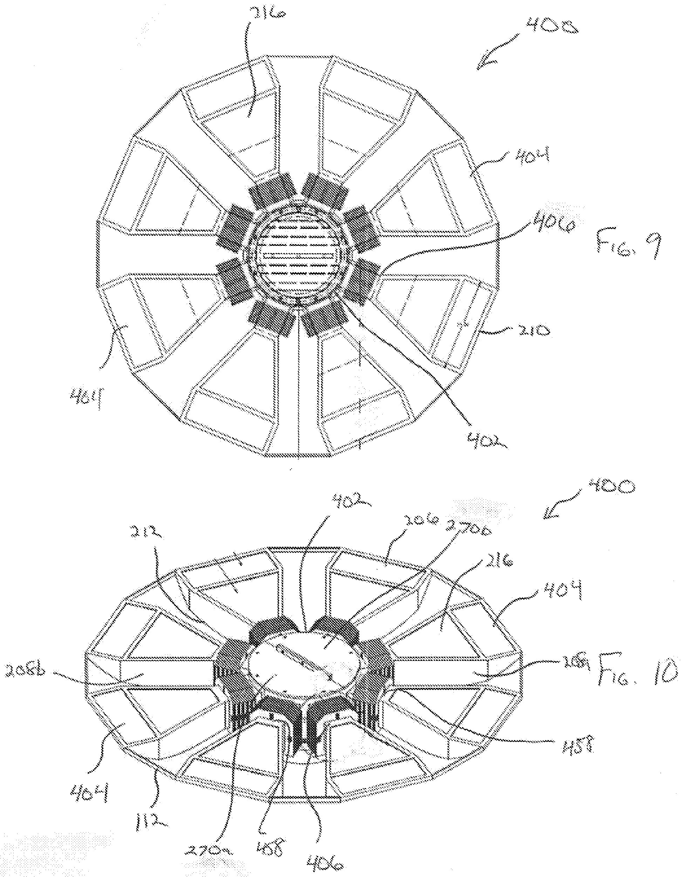

Another representative embodiment of a support grid assembly 400 is illustrated in FIGS. 9 and 10. Generally, support grid assembly 400 can be used in the same applications as support grid assembly 200 but with a method of assembly that can be more suitable for certain installations. Support grid assembly 400 generally comprises a central fluid manifold 402 to which a plurality of screen panel assemblies 404 can be spaced and individually mounted. Central manifold 402 and screen panel assemblies 404 can have a similar appearance and be fabricated similarly to central manifold 202 and screen panel assemblies 204. Primary differences can comprise the way the screen panel assemblies 404 are coupled to the central manifold 402, the way the screen panel assemblies 404 interface with the vessel floor 112 and the overall assembly mode of support grid assembly 404

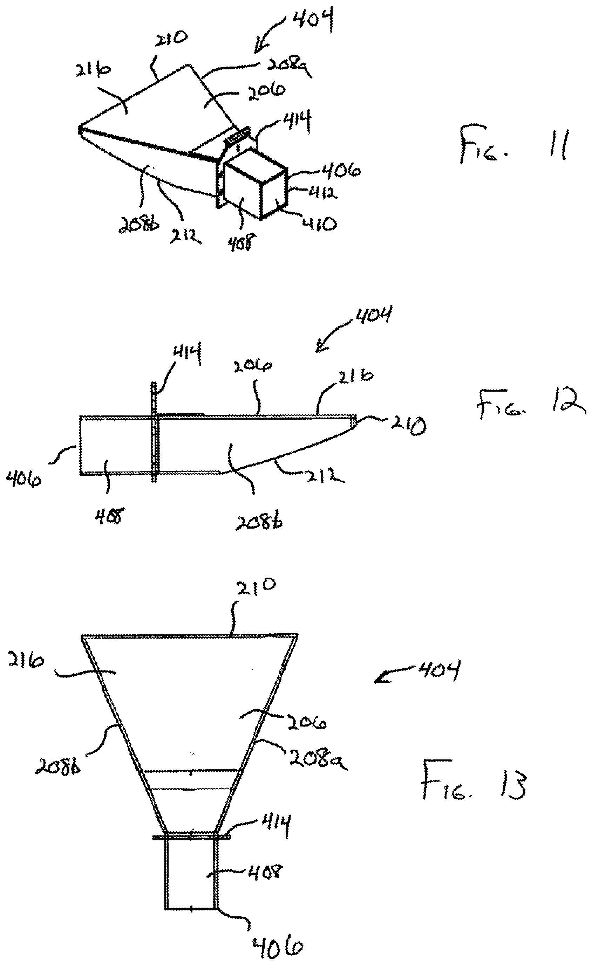

Each screen panel assembly 404 as shown in FIGS. 11, 12, and 13 can generally comprise upper surface 206, side surfaces 208a, 208b, end surface 210 and lower surface 212 so as to cooperatively defᵢne the internal fluid collection area 214. Screen panel assembly 404 can again comprise one or more screen panels 216 that allow a fluid to pass through the screen panel 216 while preventing the passage of filter media 116 Screen panel 216 can be fabricated as described previously with a plurality of spaced filter wires supported on support rods, and in some preferred embodiments, include wire with a substantially triangular cross-section, for example, Vee-Wire^{®} type screens or wedge wire type screens. As described previously, screen panel 216 can also include plates having perforations, slots, and/or other filter-type openings formed therein. In various embodiments, the wires and/or plate openings can be oriented symmetrically, asymmetrically, horizontally, vertically, tangentially, and combinations thereof relative to a longitudinal axis defined by each screen panel assembly 404. In certain embodiments, the spacing and sizes of wires and/or plate openings defined on each screen panel 216 can vary along the surface of each screen panel 216. In some representative embodiments, each screen panel 216 can include one or more combinations of filter wires, plates, features with perforations and features that otherwise provide a plurality of filter-type openings allowing fluid to pass through said filter-type openings while preventing the passage of filter media. In addition to the presence of screen panel 216 on the upper surface 206, one or more screen panels 216 can also be found on one or more of the side surfaces 208a, 208b. end surface 210 and lower surface 212 to increase the filtering capacity of each screen panel assembly 204 or to achieve desired flow properties, for example, fluid velocities through the screen panel 216. Though not illustrated, it will be understood that each screen panel assembly 204 can comprise one or more flow directors or flow channels defined within the internal fluid collection area 214 capable of directing fluid flow to the central fluid manifold 202 in normal operation or out the screen panels 216 in a backwash mode. In some embodiments, the one or more flow directors can extend between the upper surface 206 and lower surface 212 to provide structural reinforcement to the screen panel assembly 204

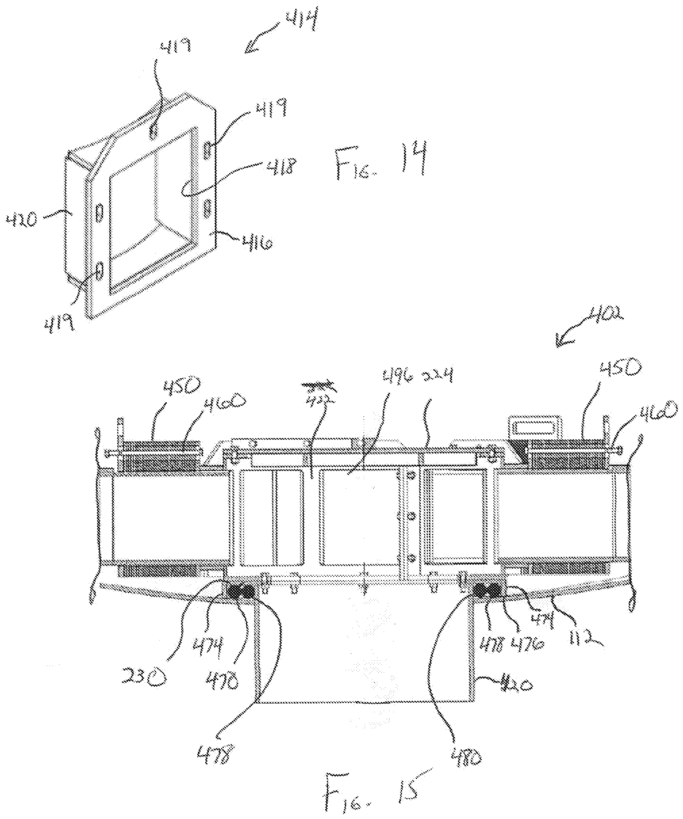

In comparing individual screen panel assembly 404 to screen panel assembly 204, a primary difference between the embodiments is at a male connecting end 406. Generally, male connecting end 406 includes an elongated insertion sleeve 408 defining a panel assembly opening 410 having an opening perimeter shape 412. Panel assembly opening 410 is generally fluidly connected to the internal fluid collection area 214. Positioned over the elongated insertion sleeve 408 is a screen panel coupling flange 414 as shown in FIG. 14. Screen panel coupling flange 414 includes a flanged coupling surface 416 defining a coupling opening 418 that is shape and sized for slidable placement over the elongated insertion sleeve 408. The flanged coupling surface 416 includes a plurality of coupling flange apertures 419. The screen panel coupling flange 414 can further comprise a coupling body 420 that is attached to the flanged coupling surface 416 and sits flush with elongated insertion sleeve 408 when positioned through the coupling opening 418.

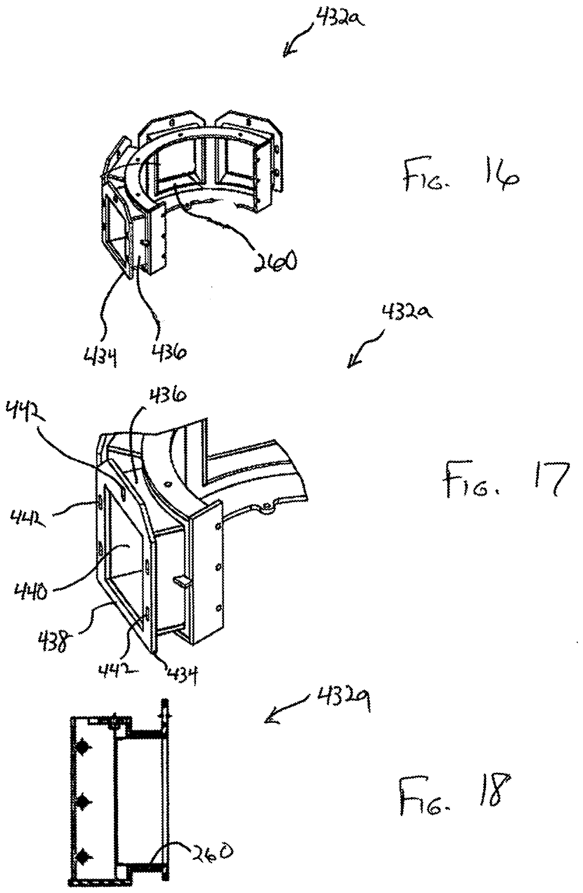

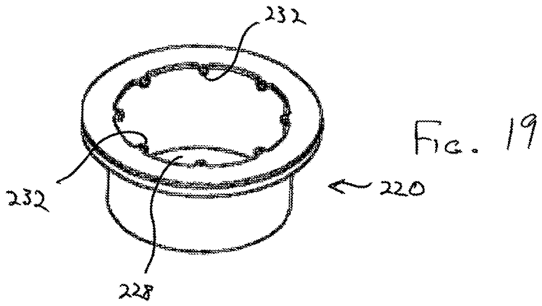

Central fluid manifold 402 as shown in FIGS. 15, 16, 17, 18, 19 and 20 can be substantially similar to central fluid manifold 402 with mounting cylinder 220, panel mounting body 222 and a cover plate 224. Depending upon the overall size and capacity of the cylindrical vessel 100, the plurality of spaced apart mounting apertures 232 can be external to the flow passage 228 as illustrated with respect to support grid assembly 200 or internally located within the flow passage 228 as illustrated in FIG. 19. The panel mounting body 222 of central fluid manifold 402 can be cooperatively defined by a pair of substantially identical body structures 432a, 432b Body structures 432a, 432b can substantially resemble body structure 250a, 250b but with variation so as to accommodate connection to screen panel assembly 404. Generally, each body structure 432a, 432 includes a projecting flange mount 434 attached to a projecting body 436 that extends outward from individual manifold sleeve opening 260. Projecting flange mount 434 generally includes a projecting coupling surface 438 defining a projecting opening 440 and having a plurality of projecting flange apertures 442. Projecting coupling surface 438 is shaped and sized to match the flanged coupling surface 416 such that flange apertures 442 align with coupling flange apertures 419 and the projecting opening 440 matches the coupling opening 418.

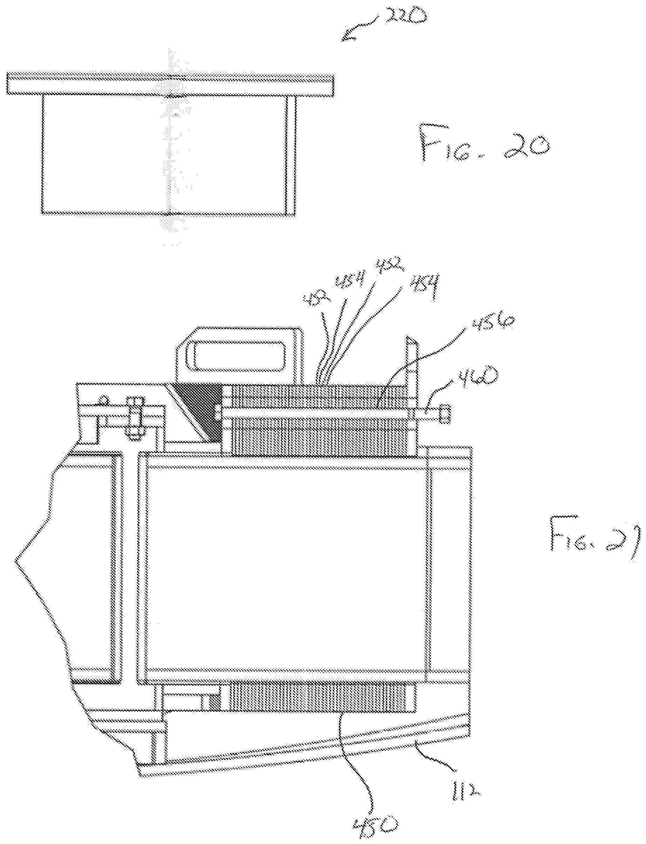

Whereas support grid assembly 200 makes use of the interface between the cylindrical mounting rod 314 and the mounting brackets 234 to provide rotational support and adjustability between the screen panel assemblies 204 and the central fluid manifold 202, support grid assembly 400 utilizes a flexible gasket assembly 450 as illustrated in FIG. 21. Generally, flexible gasket assembly 450 comprises alternating layers of a compressible gasket member 452 and a rigid support member 454. Generally, compressible gasket member 452 and rigid support member 454 will be shaped and sized so as to resemble the size and shape of flanged coupling surface 416 and projecting coupling surface 438 including gasket apertures 456 in both the compressible gasket member 452 and rigid support member 454 that align with the coupling flange apertures 419 and flange apertures 442. Compressible gasket member 452 and rigid support member 454 each include complimentary openings such that the combined flexible gasket assembly 450 has a gasket assembly opening 458 that substantially resembles the coupling opening 418 and projecting opening 440, thereby allowing the flexible gasket assembly 450 to be positioned over the elongated insertion sleeve 408. A plurality of gasket fastener's 460 can be inserted though the coupling flange apertures 419, the gasket apertures 456 and the flange apertures 442 to sealably capture the compressible gasket member 452 and individually mount each screen panel assembly 404 to the central fluid manifold 402. The layered nature of the flexible gasket assembly 450 provides vertical and horizontal flexibility to the individual screen panel assemblies 404 such that they maintain fluid connection to the central fluid manifold 402 while allowing the lower surface 212 of each screen panel assembly 404 to individually engage and be supported by the vessel floor 112, thereby accommodating fabrication variations that can be present on the vessel floor 1 12.

In addition to an alternative mounting arrangement for the screen panel assemblies 404, support grid assembly 400 can further comprise an additional sealing arrangement between the central hub 402 and the vessel floor 112 as shown in FIG. 15 to reduce and/or eliminate the potential for any fluid bypass of the screen panel assemblies 404 Generally, the mounting flange 230 can comprise a bottom surface 470 that faces the vessel floor 112. Proximate a flange perimeter 472, the bottom surface 470 can define a downward extending lip 474. Downward extending lip 474 terminates in a lip edge 476. During installation of the central hub 402, the mounting cylinder 420 is inserted though the outlet 110. Prior to inserting the mounting cylinder 420, one or more compressible hub gaskets 478, for example, o-rings or other suitable sealing members and materials, can be positioned around the mounting cylinder 420 and into a sealing space 480 defined by the downward extending lip 424, the bottom surface 470 and the mounting cylinder 420. The mounting cylinder 420 is fully inserted when the downward extending lip 424 contacts the vessel floor 112, whereby the one more compressible gaskets 478 are compressed so as to seal and prevent bypass of any fluid along the vessel floor 112. As the cylindrical vessel 100 is loaded with filter media 116, the additional weight of the filter media 116 and fluid on the support grid assembly 400 can further assist in maintaining the seal at the vessel floor 112.

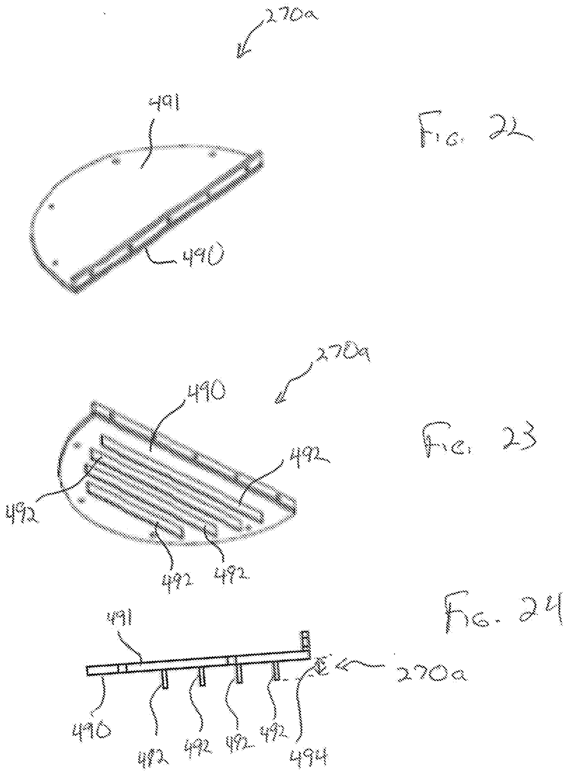

Support grid assembly 400 can further comprise one or more features to provide strength and/or improve flow performance within the central hub 402. As seen in FIGS. 22, 23 and 24, cover plate 224 can comprise plate members 270a, 270b that each include a lower plate surface 490 that resides inside the support grid assembly 400 when the cover plate 224 is coupled to the panel mounting body 422. Lower plate surface 490 can include a plurality of elongated members 492. Elongated members 492 can be arranged in parallel arrangement or alternatively, can be arranged radially as if projecting from a central axis that corresponds with a central axis of the cover plate 224. In some embodiments, elongated members 492 serve as reinforcement members that provide structural support to the cover plate 224. The use of elongate members 492 as reinforcement members can be especially important in embodiments in which the plate members 270a, 270b include an upper surface 491 formed of the same or similar screen panel 216 in order to increase overall filtering area and corresponding flow capacity of the support grid assembly 400. In some embodiments, the elongated members 492 can be formed to have a desired member height 494 such that elongated members 490 project downwardly into a panel mounting body opening 496 of the panel mounting body 422. By selecting a desired height, and for example, a radial arrangement that can correspond with the arrangement of the screen panel assemblies 404 as coupled to the panel mounting body 422, the elongated members 492 can act as flow modifiers to direct fluid flow into the mounting cylinder 420 and to avoid unfavorable flow conditions such as, for example, turbulent flow patterns. within the central fluid manifold 402.

## Claims

1. A support grid assembly (200) for mounting on a vessel floor (112), comprising:
a central fluid manifold (202), the central fluid manifold including a mounting cylinder (220) and a panel mounting body (222, 422), the panel mounting body including a plurality of sleeve openings (260) spaced around the panel mounting body; and
a plurality of screen panel assemblies (204), each screen panel assembly including a connecting end (300) defining a panel assembly opening (302), the connecting end of each screen panel assembly being slidingly insertable through the corresponding sleeve opening such that the panel assembly opening is in fluid communication with the mounting cylinder, and wherein each screen panel assembly is individually, flexibly coupled to the corresponding sleeve opening such that each individual screen panel assembly can accommodate variations in the vessel floor;
wherein the mounting cylinder includes a plurality of mounting brackets (234), wherein at least two mounting brackets are positioned below each sleeve opening, each mounting bracket defining an arcuate notch (238) and wherein each screen panel assembly includes a lower surface (212) to which a lower mounting arm (310) is operably connected, said lower mounting arm including a cylindrical mounting rod (314), wherein said cylindrical mounting rod can be operably, rotatably mounted in the arcuate notches of the at least two mounting brackets below the corresponding sleeve opening.

2. The support grid assembly of claim 1, wherein each screen panel assembly includes one or more screen panels, said screen panels (216) filtering a fluid prior to the fluid entering an internal fluid connection area (214) defined within each screen panel assembly.

3. The support grid assembly of claim 2, wherein the central fluid manifold further comprises a cover plate (224) operably coupled to the panel mounting body.

4. The support grid assembly of claim 3, wherein the cover plate comprises a pair of plate members (270a, 270b), each plate member including a central flange (274) for coupling the pair of plate members.

5. The support grid assembly of claim 3, wherein the cover plate defines a lower plate surface (490) in communication with the mounting cylinder, the lower plate surface including a plurality of elongated members (492) attached to the lower plate surface.

6. The support grid assembly of claim 5, wherein the cover plate defines an upper surface (491), said upper surface including a cover screen panel (216) for filtering fluid prior to the fluid entering the mounting cylinder.

7. The support grid assembly of claim 5, wherein the plurality of elongated members have a member height (494) such that the plurality of elongated members extend into a panel mounting body opening (496) of the panel mounting body, the member height selected such that the plurality of elongated members modify fluid flow within the mounting cylinder.

8. The support grid assembly of claim 7, wherein the plurality of elongated members are arranged in a non-parallel, radial arrangement relative to a central axis of the cover plate.

9. The support grid assembly of claim 2, wherein the mounting cylinder defines a mounting flange (230), said panel mounting body being operably connected to the mounting flange.

10. The support grid assembly of claim 9, wherein the mounting flange defines a bottom surface (470) having an extending lip, said extending lip (474) contacting the vessel floor so as to define a sealing space in which one or more compressible gaskets (478) are positioned so as seal the mounting cylinder against the vessel floor.

11. The support grid assembly of claim 9, wherein the panel mounting body comprises a pair of panel body structures, each panel body structure (250a, 250b) being individually, operably coupled to the mounting flange.

12. The support grid assembly of claim 2, wherein the panel mounting body further comprise a panel flange assembly (320) operably mounted over each sleeve opening, each panel flange assembly having a panel flange opening for operably receiving the panel assembly opening.

13. The support grid assembly of any preceding claim, wherein the cylindrical mounting rod of each screen panel assembly rotates relative to the at least two mounting brackets below the corresponding sleeve opening such that the lower surface contacts the vessel floor.

14. The support grid assembly of any preceding claim, wherein each screen panel assembly includes an upper surface (206) and wherein each upper surface includes a handle member (308) whereby the screen panel assembly can be oriented relative to the corresponding sleeve opening.

15. The support grid assembly of claim 12. wherein each screen panel assembly includes an elongated insertion sleeve (408), each screen panel assembly further having a screen panel coupling flange (414) and a flexible gasket assembly (450) mounted over each elongated insertion sleeve, said flexible gasket assembly being sealably captured between the screen panel coupling flange and the panel flange assembly.

16. The support grid assembly of claim 15, wherein the flexible gasket assembly comprises a multi-layer gasket member including one or more compressible gasket member (452) and one or more rigid support members (454).

17. The support grid assembly of claim 16, wherein the multi-layer gasket member comprises alternating layers of the compressible gasket members and the rigid support members.

18. The support grid assembly of claim 15. wherein each screen panel assembly includes a lower surface and wherein the flexible gasket assembly allows the lower surface of each screen panel assembly to independently engage the vessel floor.

19. The support grid assembly of claim 18, wherein the flexible gasket assembly provides each screen panel assembly independent vertical and horizontal positioning relative to the panel mounting body.

## Patentansprüche

1. Stützgitteranordnung (200) zur Montage an einem Gefäßboden (112), Folgendes umfassend:
einen zentralen Fluidverteiler (202), wobei der zentrale Fluidverteiler einen Montagezylinder (220) und einen Plattenmontagekörper (222, 422) umfasst, wobei der Plattenmontagekörper eine Vielzahl von Hülsenöffnungen (260) beinhaltet, die rings um den Plattenmontagekörper beabstandet sind; und
eine Vielzahl von Siebplattenanordnungen (204), wobei jede Siebplattenanordnung ein Verbindungsende (300) beinhaltet, das eine Plattenanordnungsöffnung (302) definiert, wobei das Verbindungsende jeder Siebplattenanordnung gleitfähig durch die entsprechende Hülsenöffnung derart einsetzbar ist, dass die Plattenanordnungsöffnung in Fluidkommunikation mit dem Montagezylinder steht, und wobei jede Siebplattenanordnung derart einzeln flexibel mit der entsprechenden Hülsenöffnung gekoppelt ist, dass jede einzelne Siebplattenanordnung Variationen im Gefäßboden Rechnung tragen kann;
wobei der Montagezylinder eine Vielzahl von Montagehalterungen (234) beinhaltet, wobei unter jeder Hülsenöffnung mindestens zwei Montagehalterungen positioniert sind, jede Montagehalterung eine bogenförmige Kerbe (238) definiert und wobei jede Siebplattenanordnung eine Unterseite (212) beinhaltet, mit der ein unterer Montagearm (310) funktionsfähig verbunden ist, wobei der untere Montagearm einen zylinderförmigen Montagestab (314) umfasst, wobei der zylinderförmige Montagestab funktionsfähig, drehbar in den bogenförmigen Kerben der mindestens zwei Montagehalterungen unter der entsprechenden Hülsenöffnung montiert sein kann.

2. Stützgitteranordnung nach Anspruch 1, wobei jede Siebplattenanordnung eine oder mehrere Siebplatten beinhaltet, wobei die Siebplatten (216) ein Fluid filtern, bevor das Fluid in einen inneren Fluidverbindungsbereich (214) eintritt, der in jeder Siebplattenanordnung definiert ist.

3. Stützgitteranordnung nach Anspruch 2, wobei der zentrale Fluidverteiler ferner eine Deckplatte (224) umfasst, die funktionsfähig mit dem Plattenmontagekörper gekoppelt ist.

4. Stützgitteranordnung nach Anspruch 3, wobei die Deckplatte ein Paar aus Plattenelementen (270a, 270b) umfasst, wobei jedes Plattenelement eine zentrale Backe (274) zum Koppeln des Paares aus Plattenelementen beinhaltet.

5. Stützgitteranordnung nach Anspruch 3, wobei die Deckplatte eine Plattenunterseite (490) in Kommunikation mit dem Montagezylinder definiert, wobei die Plattenunterseite eine Vielzahl länglicher Elemente (492) beinhaltet, die an der Plattenunterseite angebracht sind.

6. Stützgitteranordnung nach Anspruch 5, wobei die Deckplatte eine Oberseite (491) definiert, wobei die Oberseite eine Decksiebplatte (216) zum Filtern von Fluid vor Eintritt des Fluids in den Montagezylinder beinhaltet.

7. Stützgitteranordnung nach Anspruch 5, wobei die Vielzahl länglicher Elemente eine Elementhöhe (494) aufweisen, so dass sich die Vielzahl länglicher Elemente in eine Plattenmontagekörperöffnung (496) des Plattenmontagekörpers erstrecken, wobei die Elementhöhe derart ausgewählt ist, dass die Vielzahl länglicher Elemente den Fluidstrom in dem Montagezylinder modifizieren.

8. Stützgitteranordnung nach Anspruch 7, wobei die Vielzahl länglicher Elemente in einer nicht parallelen, radialen Anordnung relativ zu einer zentralen Achse der Deckplatte angeordnet sind.

9. Stützgitteranordnung nach Anspruch 2, wobei der Montagezylinder eine Montagebacke (230) definiert, wobei der Plattenmontagekörper funktionsfähig mit der Montagebacke verbunden ist.

10. Stützgitteranordnung nach Anspruch 9, wobei die Montagebacke eine Bodenfläche (470) definiert, die eine sich erstreckende Lippe aufweist, wobei die sich erstreckende Lippe (474) derart mit dem Gefäßboden in Kontakt steht, dass ein Dichtungsraum definiert ist, in dem ein oder mehrere komprimierbare Dichtungsringe (478) positioniert sind, so dass der Montagezylinder gegen den Gefäßboden abgedichtet ist.

11. Stützgitteranordnung nach Anspruch 9, wobei der Plattenmontagekörper ein Paar aus Plattenkörperstrukturen umfasst, wobei jede Plattenkörperstruktur (250a, 250b) einzeln funktionsfähig mit der Montagebacke gekoppelt ist.

12. Stützgitteranordnung nach Anspruch 2, wobei der Plattenmontagekörper ferner eine Plattenbackenanordnung (320) umfasst, die funktionsfähig über jeder Hülsenöffnung montiert ist, wobei jede Plattenbackenanordnung eine Plattenbackenöffnung zum funktionsfähigen Aufnehmen der Plattenanordnungsöffnung aufweist.

13. Stützgitteranordnung nach einem vorhergehenden Anspruch, wobei sich der zylinderförmige Montagestab jeder Siebplattenanordnung derart relativ zu den mindestens zwei Montagebacken unter der entsprechenden Hülsenöffnung dreht, dass die Unterseite in Kontakt mit dem Gefäßboden steht.

14. Stützgitteranordnung nach einem vorhergehenden Anspruch, wobei jede Siebplattenanordnung eine Oberseite (206) beinhaltet und wobei jede Oberseite ein Griffelement (308) beinhaltet, wodurch die Siebplattenanordnung relativ zu der entsprechenden Hülsenöffnung ausgerichtet werden kann.

15. Stützgitteranordnung nach Anspruch 12, wobei jede Siebplattenanordnung eine längliche Einsteckhülse (408) beinhaltet, wobei jede Siebplattenanordnung ferner eine Siebplattenkopplungsbacke (414) und eine flexible Dichtungsanordnung (450) aufweist, die über jeder länglichen Einsteckhülse montiert ist, wobei die flexible Dichtungsanordnung abdichtend zwischen der Siebplattenkopplungsbacke und der Plattenbackenanordnung erfasst ist.

16. Stützgitteranordnung nach Anspruch 15, wobei die flexible Dichtungsanordnung ein mehrlagiges Dichtungselement umfasst, das ein oder mehrere komprimierbare Dichtungselemente (452) und ein oder mehrere starre Stützelemente (454) beinhaltet.

17. Stützgitteranordnung nach Anspruch 16, wobei das mehrlagige Dichtungselement abwechselnde Lagen aus den komprimierbaren Dichtungselementen und den starren Stützelementen umfasst.

18. Stützgitteranordnung nach Anspruch 15, wobei jede Siebplattenanordnung eine Unterseite beinhaltet und wobei die flexible Dichtungsanordnung den unabhängigen Eingriff der Unterseite jeder Siebplattenanordnung mit dem Gefäßboden ermöglicht.

19. Stützgitteranordnung nach Anspruch 18, wobei die flexible Dichtungsanordnung jeder Siebplattenanordnung unabhängiges vertikales und horizontales Positionieren relativ zu dem Plattenmontagekörper bereitstellt.

## Revendications

1. Ensemble grille de support (200) destiné à être monté sur un fond de cuve (112), comprenant :
un collecteur de fluide central (202), le collecteur de fluide central comportant un cylindre de montage (220) et un corps de montage de panneaux (222, 422), le corps de montage de panneaux comportant une pluralité d'ouvertures en manchon (260) espacées autour du corps de montage de panneaux ; et
une pluralité d'ensembles de panneaux filtrants (204), chaque ensemble de panneaux filtrants comportant une extrémité de liaison (300) définissant une ouverture d'ensemble de panneaux (302), l'extrémité de liaison de chaque ensemble de panneaux filtrants pouvant être insérée de manière coulissante à travers l'ouverture en manchon correspondante de sorte que l'ouverture d'ensemble de panneaux soit en communication fluidique avec le cylindre de montage, et chaque ensemble de panneaux filtrants étant couplé individuellement et de manière flexible à l'ouverture en manchon correspondante de sorte que chaque ensemble de panneaux filtrants individuel puisse s'adapter aux variations du fond de cuve ;
dans lequel le cylindre de montage comporte une pluralité de pattes de montage (234), au moins deux pattes de montage étant positionnées sous chaque ouverture en manchon, chaque patte de montage définissant une encoche arquée (238) et chaque ensemble de panneaux filtrants comportant une surface inférieure (212) à laquelle un bras de montage inférieur (310) est relié de manière fonctionnelle, ledit bras de montage inférieur comportant une tige de montage cylindrique (314), ladite tige de montage cylindrique pouvant être montée de manière fonctionnelle et rotative dans les encoches arquées des au moins deux pattes de montage sous l'ouverture en manchon correspondante.

2. Ensemble grille de support selon la revendication 1, dans lequel chaque ensemble de panneaux filtrants comporte un ou plusieurs panneaux filtrants, lesdits panneaux filtrants (216) filtrant un fluide avant que le fluide n'entre dans une zone de liaison fluidique interne (214) définie à l'intérieur de chaque ensemble de panneaux filtrants.

3. Ensemble grille de support selon la revendication 2, dans lequel le collecteur de fluide central comprend en outre une plaque de couverture (224) accouplée de manière fonctionnelle au corps de montage de panneaux.

4. Ensemble grille de support selon la revendication 3, dans lequel la plaque de couverture comprend une paire d'éléments de plaque (270a, 270b), chaque élément de plaque comprenant une bride centrale (274) destinée à accoupler la paire d'éléments de plaque.

5. Ensemble grille de support selon la revendication 3, dans lequel la plaque de couverture définit une surface inférieure de plaque (490) en communication avec le cylindre de montage, la surface inférieure de plaque comportant une pluralité d'éléments allongés (492) fixés à la surface inférieure de plaque.

6. Ensemble grille de support selon la revendication 5, dans lequel la plaque de couverture définit une surface supérieure (491), ladite surface supérieure comportant un panneau de filtrant de couverture (216) destiné à filtrer le fluide avant que le fluide n'entre dans le cylindre de montage.

7. Ensemble grille de support selon la revendication 5, dans lequel la pluralité d'éléments allongés ont une hauteur d'élément (494) telle que la pluralité d'éléments allongés s'étendent jusque dans une ouverture de corps de montage de panneaux (496) du corps de montage de panneaux, la hauteur d'élément étant choisie de sorte que la pluralité d'éléments allongés modifient l'écoulement de fluide à l'intérieur du cylindre de montage.

8. Ensemble grille de support selon la revendication 7, dans lequel la pluralité d'éléments allongés sont agencés selon un agencement radial non parallèle par rapport à un axe central de la plaque de couverture.

9. Ensemble grille de support selon la revendication 2, dans lequel le cylindre de montage définit une bride de montage (230), ledit corps de montage de panneaux étant relié de manière fonctionnelle à la bride de montage.

10. Ensemble grille de support selon la revendication 9, dans lequel la bride de montage définit une surface de fond (470) pourvue d'une lèvre saillante, ladite lèvre saillante (474) étant en contact avec le fond de cuve de manière à définir un espace d'étanchéité dans lequel un ou plusieurs joints d'étanchéité compressibles (478) sont positionnés afin d'assurer l'étanchéité du cylindre de montage contre le fond de cuve.

11. Ensemble grille de support selon la revendication 9, dans lequel le corps de montage de panneaux comprend une paire de structures de corps de panneaux, chaque structure de corps de panneaux (250a, 250b) étant accouplée de manière individuelle et fonctionnelle à la bride de montage.

12. Ensemble grille de support selon la revendication 2, dans lequel le corps de montage de panneaux comprend en outre un ensemble bride de panneaux (320) monté de manière fonctionnelle sur chaque ouverture en manchon, chaque ensemble bride de panneaux étant pourvu d'une ouverture de bride de panneaux destinée à recevoir de manière fonctionnelle l'ouverture d'ensemble de panneaux.

13. Ensemble grille de support selon l'une quelconque des revendications précédentes, dans lequel la tige de montage cylindrique de chaque ensemble de panneaux filtrants tourne par rapport aux au moins deux pattes de montage sous l'ouverture en manchon correspondante de sorte que la surface inférieure soit en contact avec le fond de cuve.

14. Ensemble grille de support selon l'une quelconque des revendications précédentes, dans lequel chaque ensemble de panneaux filtrants comporte une surface supérieure (206), et dans lequel chaque surface supérieure comporte un élément formant poignée (308), permettant d'orienter l'ensemble de panneaux filtrants par rapport à l'ouverture en manchon correspondante.

15. Ensemble grille de support selon la revendication 12, dans lequel chaque ensemble de panneaux filtrants comporte un manchon d'insertion allongé (408), chaque ensemble de panneaux filtrants étant en outre pourvu d'une bride d'accouplement de panneaux filtrants (414) et d'un ensemble joint d'étanchéité flexible (450) monté par-dessus chaque manchon d'insertion allongé, ledit ensemble joint d'étanchéité flexible étant piégé de manière étanche entre la bride d'accouplement de panneaux filtrants et l'ensemble bride de panneaux.

16. Ensemble grille de support selon la revendication 15, dans lequel l'ensemble joint d'étanchéité flexible comprend un élément de joint d'étanchéité multicouche comportant un ou plusieurs éléments de joint d'étanchéité compressibles (452) et un ou plusieurs éléments de support rigides (454).

17. Ensemble grille de support selon la revendication 16, dans lequel l'élément de joint d'étanchéité multicouche comprend des couches alternées des éléments de joint d'étanchéité compressibles et des éléments de support rigides.

18. Ensemble grille de support selon la revendication 15, dans lequel chaque ensemble de panneaux filtrants comporte une surface inférieure, et dans lequel l'ensemble joint d'étanchéité flexible permet à la surface inférieure de chaque ensemble de panneaux filtrants de prendre appui de manière indépendante sur le fond de cuve.

19. Ensemble grille de support selon la revendication 18, dans lequel l'ensemble joint d'étanchéité flexible permet un positionnement vertical et horizontal indépendant de chaque ensemble de panneaux filtrants par rapport au corps de montage de panneaux.
